(19) Europäisches Patentamt
European Patent Office
Office européen des brevets

(11) **EP 1 164 359 B1**

(12) **EUROPEAN PATENT SPECIFICATION**

(45) Date of publication and mention of the grant of the patent:
**09.03.2005 Bulletin 2005/10**

(51) Int Cl.[7]: **G01D 5/36**, G01D 5/347, G01B 11/00

(21) Application number: **01500139.9**

(22) Date of filing: **06.06.2001**

(54) **Optical length measuring device with optoelectronic arrangement of photodetectors**

Optischer Längenmesssensor mit einer optoelektronischen Anordnung von Photodetektoren

Capteur optique de longueur comprenant un arrangement optoélectronique de photodétecteurs

(84) Designated Contracting States:
**DE IT**

(30) Priority: **15.06.2000 ES 200001496**

(43) Date of publication of application:
**19.12.2001 Bulletin 2001/51**

(73) Proprietor: **FAGOR, S.Coop**
**20500 Mondragon (Guipuzcoa) (ES)**

(72) Inventors:
- **Morlanes, Tomas**
  **1012 Vitoria-Gasteiz (ES)**
- **Crespo, Daniel**
  **28012 Madrid (ES)**
- **Alonso, Jose**
  **28031 Madrid (ES)**

(74) Representative: **Fernandez Guzman, Juan**
**Apartado 213,**
**Barrio San Andres s/n**
**20500 Mondragon (Gipuzkoa) (ES)**

(56) References cited:
**EP-A- 0 143 525**
**EP-A- 0 250 711**
**DE-A- 19 505 176**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 164 359 B1

Printed by Jouve, 75001 PARIS (FR)

## Description

The present patent relates to an optical length measuring device comprising an optoelectronic arrangement of photodetectors as it is defined in the preamble of independent claim 1.

PRIOR ART

EP-0843159-A discloses an optical appliance for measuring the displacements or position of an object used in machine tools, the light source of which is an array of diffused light emitting diodes (LED), and it generates a light pattern such as "moirée" fringes whose period (M) is derived from the period of both gratings of the appliance, which varies cyclically in intensity in the direction of the displacement (X) of a scanning grating on a grating of the measuring scale. Its photoelectric analyzer is positioned in an image plane, on which the light pattern falls, and configured with a series of elongated photosensitive areas on a semiconductor substrate. The photosensitive areas are spaced in the direction of the displacement (X) and in the direction perpendicular (Y) to the length of the scale, and they are arranged in accordance with various electrically interconnected photodetector sets or systems. The photosensitive areas of one photodetector system or the other are interposed in series in direction X, following a repeated model, and the distance separating photosensitive areas is related to the period of the light pattern, in order to obtain various electrical output signals without the harmonic distortions due to imprecisions of the gratings. The combined signals provide two quasi-sinusoidal signals in quadrature, which are computed to provide a measurement of displacement.

ES-2029802-T3 (EP- 0250711-A) discloses an optoelectronic arrangement of photodetectors for measuring relative displacement between a scanning grating and a scale grating of equal or only slightly differing periods, which uses collimated light to obtain fringes of "moirée" light of period M dependent on the periods (p', p") of the gratings. The known optoelectronic arrangement comprises at least a complete photodetector system or unit made up of four photosensitive areas or fields of given shape and width and separated in the direction of displacement (X) by a 1/4 fraction of period M, equivalent to an angle equal to 90 degrees relative displacement *x*. The four photosensitve areas are of sinusoidal contour and are interposed in series, oriented half and half in opposition. When this optoelectronic arrangement is subjected to a Fourier analysis in accordance with *x* and the bandwidth *N*, it succeeds in suppressing harmonic distortions of any order by filtration. In this arrangement of photodetectors, when the fringe period varies, it reduces the signal amplitude critically.

EP-0143525-A discloses a sensor for detecting the position of a movable object, wherein the source is diffuse light and the light detector comprises a set of photocells, arranged in a series layout in the direction of displacement X, of two halves composed of symmetrical photocells in relation to a central axis or barycentre of lighting perpendicular to the direction of displacement. The sensitive cells or areas are separated by a periodic distance Pc, and they are of varying height. The photocells are classified in four groups, all with the same barycentre of lighting and electrically connected to obtain four signals phase shifted 90° from one another, A-, B+, A+ and B-. The separation distance between two photocells of the same group is Po=4xPc, the same as period Po of a transparent scanning grating. Thus, any error in the relation between the transparent grating period Po and the photocell period Pc has no effect on the electrical signals showing the position of the transparent grating relative to the photocells. This known arrangement of photocells is used to resolve the problem of error in the phase shift of the electrical signals generated in the photocells, caused by deviations in the relative assembly position of the transparent grating on the photocells, but it does not solve the problem of reduction of amplitude of the electrical signals, which is produced when the period of the fringes varies. It does not eliminate harmonic distortions completely either.

De 1950176 discloses an optical encoder with two photodetectors, each comprising two photodiodes with sinusoidally varying sensitive areas.

The optoelectronic arrangements of the prior art suppress the harmonic distortions of a given bandwidth or all of them, it being necessary to obtain two sinusoidal electrical output signals for computing the pulses and the consequent interpolation of smaller length values than the period *p* of the measuring scale, for which they have four sensitive areas or photocells arranged one after another in order in direction X, at a given distance or period dependent on the period *p* of the incident fringes of light.

To achieve an optoelectronic arrangement that will obtain two sinusoidal signals free of all harmonics and which are at the same time stable, the four photodetector units, referred to hereinafter as photodiodes, as they are known from the prior art, should be constructed on the image plane of the semiconductor substrate, completing in twos a period *p* exactly the same as the period of the fringes of light that they receive. However, due to the deviations in the assembly of the two gratings, such precision of the period *p* of the fringes of light in respect of the period in the distribution of the photodiodes on the image plane is not possible, so the analogue electrical measuring signal obtained undergoes significant variations in amplitude in all the optical measuring appliances of the prior art.

In the solutions of the prior art, therefore, it is necessary for the scale and scanning gratings in an optical measuring appliance to be assembled with narrow construction tolerances. In the same way as the geometrical dimensions of the photodetectors, and their period must be the same as the period *p* of the light fringes, since the result of the measurement obtained with the known solutions depends closely on the precision of their construction.

DISCLOSURE OF THE INVENTION

The object of the invention is an optical length measuring device comprising an optoelectronic arrangement of photodetectors , which is the receiver of a cyclic intensity of light fringes, generated by way of a mobile optical element associated with the object whose displacement we want to measure, for conversion into electrical measuring signals, as defined in claim 1.

The problem solved by the invention is to find the area, shape and distribution of the hotpcells or photodiodes of the optoelectronic arrangement used in the optical length measuring device, in which the pitch of separation between the photodiodes is not dependent on the period of the light fringes, in a wide range of values. In an optical length measuring device which incorporates this optoelectronic arrangement , the incident light fringes generated for measuring length may be obtained by Moiré effect, by Lau effect, by interferometry, or by direct projection of an image from a linear lattice. The objective achieved with the invention is that the photodiodes of the optoelectronic arrangement meet the following conditions:

- they generate the same amplitude of electrical signal for any value of period *p* of the light fringes falling upon the detection plane, said period comprised in a broad interval between two values $p_1$ and $p_2$ - they maintain the phase quadrature between the electrical signals generated even though the period *p* of the fringes may vary, and
- eliminates the upper harmonics of the signal completely.

The optical length measuring device according to the invention is defined in independent claim 1. This device comprises two photodetectors each comprising two photodiodes, while each of the four diodes is made up of a series of photosensitive areas arranged on an image plane of light fringes, spaced at distances depending on a central value of the period of the fringes, but being of a shape, size, number and distribution such that, besides achieving complete suppression of the harmonic distortions in the electrical output signals of each photodiode, the signals are stable and non-dependent on the deviations in the value of the period *p* of the incident light fringes. The optoelectronic arrangement according to the invention also permits the reading of periodic fringes with any light intensity distribution that is periodic.

The four photodiodes are impressed on the image plane of the optoelectronic arrangement, distributed in two photodetectors or separated halves, to obtain respectively the four sinusoidal signals $S(\theta,p)$ phase shifted 90°, sine+ and sine-, from a half or photodetector, and cos+, cos- from the second half arrangement or photodetector. The variable *p* is the period of the light fringes received on the photodetectors, and θ (theta) the relative displacement of the light fringes. One half of the sensitive areas constitutes two photodiodes of a first photodetector, and they are arranged in alternate series one after another in direction X. The other half of the sensitive areas, those of a second photodetector are not in series with the first ones, but are arrayed parallel to the first half.

The distribution $f(x,\theta)$ of the intensity of the light fringes falling upon the image plane of the photodiodes is represented as a Fourier series

$$f(x,\theta) = A + B\sum_{n\geq 1} a_n Cos\left(\frac{2\pi n}{p}(x+\theta)\right) \quad , \qquad (1)$$

where *x* is the variable of the length to be measured in a direction *X* perpendicular to the fringes of light. In the optical length measuring device according to the invention, *p* is the period of the light fringes, and θ (theta) the relative displacement or relative position between the scale and scanning gratings of a measuring appliance that generates Moiré fringes or Lau fringes, or between the measuring and reference light beams on an interferometer, i.e. the relative displacement between the light fringes falling upon the image plane of the photodetector arrangement.

To achieve the object of the invention, the two photodetectors are designed for obtaining the electrical signals for the measurement *sin x* and *cos x,* their areas being represented by two functions $g_1x$ and $g_2x$, which meet the following conditions (2) and (3):

$$\int_{-\infty}^{+\infty} f(x,\theta)g_1(x)\,dx = Cos\left(\frac{2\pi}{p}\theta\right) \quad (2),$$

$$\int_{-\infty}^{+\infty} f(x,\theta)g_2(x)\,dx = Sin\left(\frac{2\pi}{p}\theta\right) \quad (3)$$

From the development of the equations we obtain the four photodiodes whose electrical connection generates two signals in perfect quadrature, of which there is no possibility of computation error and from which dependence on period *p* is eradicated, since, in the event of period *p* of the light fringes varying because of dimensional deviations in the assembly of the gratings, the output signal of each diode will only depend on the variation in the relative position $\theta$ corresponding to the displacement of the fringes, and they will therefore not be dependent on irregularities in the construction of the optical measuring appliance.

The optoelectronic arrangement also solves the problem originated by the reduced amplitude or small amount of electrical signal due to the changing the period of the fringes compared with the prior art arrangements. The equations (2) and (3) express that said signal amplitude obtained with the optical length measuring device according to the invention is independent of period *p*.

DESCRIPTION OF THE DRAWINGS

FIG. 1 is a view of an optoelectronic arrangement with photodetectors used in the optical length measuring device according to the invention, showing a distribution of the area of four photodiodes in the image plane of a measuring appliance.

FIG. 2 is a view of an optoelectronic arrangement with photodetectors, showing a second distribution of the area of the four photodiodes of fig. 1.

FIG. 3 is a graphic representation of the Fourier transform of the "sine" electrical signal obtained from a first photodiode of fig. 1.

FIG. 4 is a graphic representation of the Fourier transform of the "cos" electrical signal obtained from a second photodiode of fig. 1.

FIG. 5 is a diagram expressing the relative amplitude of the electrical output signal obtained from a photodiode of fig. 1, in accordance with the dimensional assembly deviation between two gratings of a measuring appliance.

FIG. 6 is a diagram expressing the deviation in the phase quadrature of the electrical signals obtained from the photodetectors of fig. 1.

DETAILED DESCRIPTION OF THE INVENTION

With reference to figures 1 and 2, the geometrical configurations of the photodiodes 16-19 represented there are two examples of the optoelectronic photodetector arrangement 1,2 according to the invention. Of the two photodetectors 16, 17 and 18, 19 comprised between the four photodiodes, a first photodetector 16, 17 generates the electrical signals in quadrature, sin + and sin -, and a second photodetector 18, 19 generates the signals in quadrature, cos + and cos -. The four photodiodes 16-19 are represented in each of the figures 1 and 2, on an image plane 20 which is the receiver of light fringes of period *p* transmitted in a length measuring optical appliance. Each reference numeral 16-19 in figures 1 and 2 indicates the sensitive areas comprised by each of the four photodiodes, which match up with the numbers assigned to the expressions (16), (17), (18), (19) presented and resolved in the description, in order to determine the configuration of each photodiode. Each sensitive area 16-19 has an elongated shape of height *h*, which is variable in descending order from a central sensitive area to one side of the image to the other. The sensitive

areas 16-19 follow the functions $g_1(x)$ and $g_2(x)$ developed below and are dependent on the period p of the light fringes and on the displacement *x* of the light fringes in the perpendicular direction *X*, displaced with the movement of the mobile optical element associated with the length that we want to measure.

Each photodetector comprises two photodiodes 16,17 and 18,19, respectively, the sensitive areas 16 of the first photodiode and the sensitive areas 17 of the second photodiode intercalated alternately, making up a series wherein the bases 21 of the sensitive areas root of their heights *h* form a straight line in the direction *X* of the displacement of the light fringes. The sensitive areas 18 of the third photodiode and the sensitive areas 19 of the fourth photodiode 16,17, the bases 21' of the of the sensitive areas forming a straight line coinciding with line 21 of the first photodetector 16,17, as in the example in FIG.1, or counterposed to it in the example in FIG. 2, the latter with better utilisation of the area of the image plane 20, as the two photodetectors 16,17 and 18,19 intersect on the image plane 20.

The mathematical development that is described below as part of the solution according to the invention provides the configuration of the photodetectors 16,17 and 18,19 from which two electrical sinusoidal measuring signals, *sine x* and *cos x,* are obtained. We represent their photosensitive areas by means of two functions $g_1(x)$ and $g_2(x)$ which meet the conditions (2) and (3) stated above. Development of the equations (2) and (3) provides the four photodiodes 16-19 whose electrical connection generates two signals in perfect quadrature, wherein dependence on period *p* is eradicated and the electrical output signal depends only on the relative position θ corresponding to the displacement of the fringes.

If (1) is substituted in equation (2), conditions (4) and (5) have to be fulfilled:

$$\int_{-\infty}^{+\infty} g_1(x)\,dx = 0 \quad , \qquad (4)$$

$$\sum_{n\geq 1} a_n \int_{-\infty}^{+\infty} Cos\left(\frac{2\pi n}{p}(x+\theta)\right) g_1(x)\,dx = Cos\left(\frac{2\pi}{p}\theta\right) \quad . \qquad (5)$$

By multiplying the equation (5) by

$$\exp\left(-ik\frac{2\pi}{p}\theta\right)$$

and integrating in θ, we obtain an equation (6), where δ is Dirac's delta function:

$$\sum_{n\geq 1} a_n \int_{-\infty}^{+\infty}\int_{-\infty}^{+\infty} e^{-ik\frac{2\pi}{p}\theta} Cos\left(\frac{2\pi n}{p}(x+\theta)\right) g_1(x)\,dx\,d\theta = \frac{p}{2}\left(\delta(k-1)+\delta(k+1)\right) \qquad (6)$$

By operating the equation (6), we obtain an equation (7), which, after simplification, becomes

$$\sum_{n\geq 1} a_n G_1\left(\frac{2\pi}{p}\left(\delta(k-n)+\delta(k+n)\right)\right) = \delta(k-1)+\delta(k+1) \quad , \qquad (8)$$

wherein $G_1(k)$ is the Fourier transform of the function $g_1(x)$, the latter representing the area of the first photodetector 16,17. The solution of equation (8) has to fulfil:

$$G_1\left(\frac{2\pi}{p}\right) = G_1\left(-\frac{2\pi}{p}\right) = 1,\ p \in \left[p_1, p_2\right] \qquad (9)$$

$$G_1\left(\frac{2\pi}{p}n\right) = G_1\left(-\frac{2\pi}{p}n\right) = 0,\ p \in \left[p_1, p_2\right],\ n > 1 \qquad (10)$$

and from the conditions expressed by the equations (9) and (10) we extract another condition (11)

$$\frac{2\pi}{p_1} < \frac{4\pi}{p_2} \qquad (11)$$

which has to be fulfilled by the value range *[$p_1$, $p_2$]* of the period, such that a value of *p* between them will not produce a deviation 23 of the phase in quadrature (figure 6) of the electrical signals generated in the photodiodes. Thus, the characteristics of the photodiodes 16,17 and 18,19 expressed in the equations (2) and (3) respectively are obtained.

The transformed signal $G_1(k)$, for the configuration of the first photodetector (16,17), has two values 9,10 shown in fig. 3. The inverse Fourier transform of signal *G1(k)* expresses the area and form of a first photodetector:

$$g_1(x) = \frac{1}{x}\left[Sin\left(\frac{2\pi}{p_2}x\right) - Sin\left(\frac{2\pi}{p_1}x\right)\right] \quad , \qquad (12)$$

which fulfils the condition (4),

$$\int_{-\infty}^{+\infty} g_1(x)\, dx = 0\ .$$

The same calculation process is performed to determine the area and its form according to $g_2(x)$ of the second photodetector (18,19), complementary to the first one, where $G_2(k)$ is the Fourier transform of $g_2(x)$, a similar expression to $g_1(x)$. They have to meet the following conditions:

$$G_2\left(\frac{2\pi}{p}\right) = -\,G_2\left(-\frac{2\pi}{p}\right) = i,\ p \in \left[p_1, p_2\right] \quad , \qquad (13)$$

$$G_2\left(\frac{2\pi}{p}n\right) = G_2\left(-\frac{2\pi}{p}n\right) = 0,\ p \in \left[p_1, p_2\right],\ n > 1 \qquad (14)$$

whose values given by equations (13) and (14) are represented in fig. 4, and the area and shape of the second photodetector $g_2(x)$ obtained is:

$$g_2(x) = \frac{1}{x}\left[ Cos\left(\frac{2\pi}{p_2}x\right) - Cos\left(\frac{2\pi}{p_1}x\right)\right] \quad (15)$$

To be able to implement the two photodetectors 16-17 and 18-19 defined by the expressions (12) of $g_1(x)$ and (15) of $g_2(x)$, it is necessary to produce four photodiodes 16-19, as a real photodiode cannot have positive and negative parts. The contours of the four photodiodes 16-19 represented in figures 1 and 2 are defined by the expressions (16) to (19), where *x* is the width of the sensitive areas 16-19 coinciding with the direction *X* of displacement of the light fringes perpendicular to the fringes, and *h* the height resulting from developing the functions *h(x)* referenced as (16) to (19) below:

$$h_1(x) = \begin{cases} g_1(x) & \forall x;\ g_1(x) \geq 0 \\ 0 & \forall x;\ g_1(x) < 0 \end{cases} \quad (16)$$

$$h_2(x) = \begin{cases} g_1(x) & \forall x;\ g_1(x) < 0 \\ 0 & \forall x;\ g_1(x) \geq 0 \end{cases} \quad (17)$$

$$h_3(x) = \begin{cases} g_2(x) & \forall x;\ g_2(x) \geq 0 \\ 0 & \forall x;\ g_2(x) < 0 \end{cases} \quad (18)$$

$$h_4(x) = \begin{cases} g_2(x) & \forall x;\ g_2(x) < 0 \\ 0 & \forall x;\ g_2(x) \geq 0 \end{cases} \quad (19)$$

The photodiodes having heights *h1(x)* and *h2(x)* are indicated with the numerals 16 and 17 and represented in the upper half of figures 1 and 2, and their electrical connection conforms the photodetector 16,17 obtained from the expression (12) of *g(x)*. The electrical signals from the photodiodes having heights *h1(x)* and *h2(x)* are deducted. The electrical connection of the sensitive areas having heights *h3(x)* and *h4(x)* and being indicated with the numerals 18 and 19 conforms the photodetector 18,19 obtained from the expression (15) $g_2(x)$, represented in the figures 1 and 2 by the lower half of the sensitive areas. In fig. 1 the substrate 20 is represented with the image plane on which the photodetectors of the invention have been inserted, wherein the photodetector $g_1(x)$ formed by the photodiodes 16 and 17 extends in the direction *X* of displacement of the fringes. Each one of the sensitive areas 16-19 has a more or less elongated shape, those of the same photodiode being different sized, and from a straight base 21 according to direction *X* they extend with heights *h1* and *h2* in the direction of the light fringes, and with width *x* in the direction *X* of the displacement of the light fringes. Said bases of each sensitive area do not necessarily have to be aligned, but only distributed successively along the direction *X* of displacement, for the incidence of the intensity of the fringes upon their whole area. Each photodiode 16,17 is distributed in the examples of figures 1 and 2 so that each sensitive area 16 of them of them alternates with a sensitive area 17 of the second photodiode belonging to the same photodetector. The second photodetector made according to the function $g_2(x)$ formed by the two photodiodes 18,19 extends below the first photodetector 16,17 in the inverted position, starting from its straight bases 21' adjacent to the straight bases 21 of the first photodetector 16,17 and their *h3* and *h4* extending in the opposite direction to the heights *h1* and *h2* of the photodiodes 16,17 of the first photodetector, In Fig. 2 are represented the substrate 20 of the image plane, presenting a more compact second distribution 2 of the sensitive areas of the two photodetectors 16-19. The areas of one photodetector and the other are interposed in order to occupy less substrate area, approximately 20% less than distribution 1 in figure 1.

With reference to figures 5 and 6, the electronic arrangement has been implemented in a measuring device constructed with a diffuse light source, where the light fringes are generated between a scale grating with a period equal to 40 µm and a scanning grating with a period equal to 36.7 µm. The spacing *z1* between the supports of both

gratings has a mean value of *z1* = 1.7 *mm*, and its deviation $\Delta z$ produces a proportional deviation $\Delta p$ in the nominal period *p* of the fringes transmitted, the latter value equal to 0.61 mm being the one chosen. The spacing between the image plane of the photodetectors and the support plane of the scanning grating is approximately 25 mm. When the spacing *z1* between the grating supports varies 1.5 - 2 mm, the relative value A/100 of the amplitude 22 of the electrical signals $S(\theta,p)$ obtained by the photodetectors 16,17 and 18,19, not shown in the drawings, remains greater than 80% of the maximum value. The deviation of value 23 of phase $\Psi$ in respect of the 90° phase shift between the electrical signals $S(\theta,p)$ remains less than 1°, equivalent to a positioning error between the gratings of less than 0.1 µm.

## Claims

**1.** An optical length measuring device comprising an optoelectronic arrangement of photodetectors and furthermore a light emitting source and a moving optical element associated with the length of displacement to be measured, and a fixed optical element forming between them an optical system generating cyclic fringes of light of period p which move in a direction X perpendicular to the light fringes with an instant relative position $\theta$ between them and which fall upon the optoelectronic arrangement (1,2), said optoelectronic arrangement comprising two photodetectors (16,17,18,19), each comprising two photodiodes (16,17,18,19) on an image plane (20), which are connected to an electronic circuit of the length measuring device to generate and operate with at least two electrical signals S($\theta$,p) in quadrature without harmonic distortions from the incident light fringes whose amplitude value (22) and phase shift $\Psi$ value (23) are indicative of the length measuring result, wherein the photodiodes are distributed on the image plane according to an array of sensitive areas in series, in the direction X of displacement of the light fringes, wherein each photodiode (16-19) of the same photodetector comprises a succession of sensitive areas, **characterised in that** said sensitive areas extend from a straight-line base (21, 21') of size and shape determined for each photodiode (16,18) by their width x and height h relative to the direction X of displacement of the incident fringes by means of a function g (x) whose respective expressions $g_1$(x) for a first of said photodetectors and $g_2$ (x) for a second of said photodetectors, being complementary to the first one, contain two values $p_1$ and $p_2$ of the period p of the light fringes, delimiting between them a wide range of values, from which an electrical signal S($\theta$, p) is obtained at each photodiode (16-19) independent of the variation in the period p in said range of values.

**2.** The optoelectronic arrangement of the photodetectors of claim 1, wherein said function *g(x)* which determines the width x and height h of the sensitive areas (16-19) of the photodiodes of the first photodetector (16,17) has an expression (12) such that

$$g_1(x) = \frac{1}{x}\left[ Sin\left(\frac{2\pi}{p_2}x\right) - Sin\left(\frac{2\pi}{p_1}x\right)\right]$$

and the dimensions x and h of a first photodiode (16) and its distribution in separate sensitive areas are determined by the expression

$$h_1(x) = \begin{cases} g_1(x) & \forall x;\ g_1(x) \geq 0 \\ 0 & \forall x;\ g_1(x) < 0 \end{cases}$$

while those in the second photodiode (17) which obtains the electrical signal of the opposite sign to that of the first photodiode (16) are determined by the expression (17)

$$h_2(x) = \begin{cases} g_1(x) & \forall x;\ g_1(x) < 0 \\ 0 & \forall x;\ g_1(x) \geq 0 \end{cases}$$

## Patentansprüche

1. Optischer Apparat zur Längenmessung, der eine optoelektronische Photodetektoren-Anordnung und ausserdem eine Lichtquelle, ein bewegliches optisches Element, das mit der Länge der zu messenden Fortbewegung in Verbindung steht, sowie ein festes optisches Element umfasst, wobei alle Teile ein optisches System bilden, das zyklische Lichtstreifen der Periode p erzeugt, die sich in einer Richtung X senkrecht zu den Lichtstreifen mit einer unmittelbaren Position θ fortbewegen und auf die optoelektronische Anordnung (1, 2) treffen, und daneben zwei Photodetektoren (16, 17 und 18, 19) enthält, die jeweils zwei Photodioden (16-19) auf einer Bildebene (20) umfassen, die mit dem elektronischen Stromkreis der Längenmessvorrichtung verbunden sind, um - ausgehend von den auftreffenden Lichtstreifen, deren Wert (22) der Amplitude (A) und deren Wert (23) der Phasenverschiebung Ψ das Ergebnis der Längenmessung angeben, mindestens zwei elektrische Signale S(θ,p) in Quadratur ohne harmonische Verzerrungen zu erzeugen und verwerten, wobei die Photodioden (16-19) auf der Bildebene (20) nach einem Array von in Reihe geschalteten lichtempfindlichen Oberflächen (16,17 und 18,19) in X-Richtung der Fortbewegung der Lichtstreifen verteilt werden, **dadurch gekennzeichnet, dass** jede Photodiode (16-19) ein und desselben Photodetektors (16,17 oder 18,19) eine Reihe von lichtempfindlichen Oberflächen (16-19) umfasst, die sich von einer geradlinigen Grundfläche (21,21'), deren Form und Grösse für jede Photodiode (16, 18) durch deren Breite X und Höhe h in Bezug auf die Richtung X der Fortbewegung der auftreffenden Streifen mittels einer Funktion g (x) vorgegeben wird, deren jeweilige Gleichungen $g_1(x)$ für die erste Photodiode und $g_2(x)$ für die zweite Photodiode, welche die erste ergänzt, zwei Werte p1, p2 der Periode p der Lichtstreifen enthalten, die einen weiten Intervall von Werten abgrenzen, aus denen in jeder Photodiode (16-19) ein elektrisches Signal S(θ,p) erhalten wird, das von der Abweichung der Periode p innerhalb dieses Wertintervalls unabhängig ist.

2. Optoelektronische Anordnung der Photodetektoren nach Anspruch 1, bei der die Funktion g ( x), welche die Breite x und die Höhe h der lichtempfindlichen Oberflächen (16-19) der Photodioden des ersten Photodetektors (16, 17) bestimmt, einer Gleichung (12) wie entspricht

$$g_1(x) = \frac{1}{x}\left[Sin\left(\frac{2\pi}{p_2}x\right) - Sin\left(\frac{2\pi}{p_1}x\right)\right]$$

und die Abmessungen x und h einer ersten Photodiode (16) sowie die Aufteilung in getrennte lichtempfindliche Oberflächen durch die Gleichung vorgegeben sind,

$$h_1(x) = \begin{cases} g_1(x) & \forall x;\ g_1(x) \geq 0 \\ 0 & \forall x;\ g_1(x) < 0 \end{cases} \quad ,$$

während die der zweiten Photodiode (17), die das elektrische Signal mit einem gegenüber der ersten Photodiode (16) umgekehrten Vorzeichen erhält, durch die Gleichung (17) vorgegeben werden

$$h_2(x) = \begin{cases} g_1(x) & \forall x;\ g_1(x) < 0 \\ 0 & \forall x;\ g_1(x) \geq 0 \end{cases}$$

## Revendications

1. Un dispositif optique de mesure de longueur comprenant une disposition optoélectronique de photodétecteurs, plus une source d'émission de lumière, un élément optique mobile associé à la longueur du déplacement à mesurer et un élément optique fixe, formant entre eux un système optique générateur de franges de lumière cycliques de période p qui se déplacent dans une direction X perpendiculaire aux franges de lumière avec une position relative θ instantanée entre elles, et qui incident sur la suite optoélectronique (1,2) comprenant deux photodétecteurs

(16,17 et 18,19), chacun comprenant deux photodiodes (16-19) sur un plan d'image (20), lesquels sont raccordés à un circuit électronique du dispositif de mesure de longueur pour générer et opérer avec au moins deux signaux électriques S(θ,p) en quadrature sans distorsions harmoniques à partir des franges de lumière incidentes, dont la valeur (22) d'amplitude (A) et la valeur (23) de déphasage Ψ indiquent le résultat de la mesure de longueur, où les photodiodes (16-19) sont répartis sur le plan d'image (20) suivant une formation de zones sensibles (16,17, 18,19) en série, dans la direction X du déplacement des franges de lumière, **caractérisée en ce que** chaque photodiode (16-19) d'un même photodétecteur (16,17 ou 18,19) comprend une succession de zones sensibles (16-19) qui s'étendent depuis une base (21, 21') rectiligne, dont la forme et la taille sont déterminées pour chaque photodiode (16,18) par leur largeur x et leur hauteur h par rapport à la direction X du déplacement des franges incidentes, au moyen d'une fonction g(x) dont les expressions respectives $g_1(x)$ pour le premier de ces photodétecteurs et $g_2(x)$ pour le deuxième de ces photodétecteurs, complémentaire au premier d'entre eux, comportent deux valeurs p1, p2 de la période p des franges de lumière délimitant entre eux un large intervalle de valeurs, dont on obtient un signal S(θ,p) électrique dans chaque photodiode (16-19) indépendant de la variation de la période p dans cet intervalle de valeurs.

**2.** Le dispositif optique de mesure de longueur de la revendication 1, où la fonction *g(x)* qui détermine la largeur x et la hauteur h des zones sensibles (16-19) des photodiodes du premier photodétecteur (16,17), a une expression (12) telle que

$$g_1(x) = \frac{1}{x}\left[ Sin\left(\frac{2\pi}{p_2}x\right) - Sin\left(\frac{2\pi}{p_1}x\right)\right]$$

et les dimensions x et h d'un premier photodiode (16) et leur répartition dans les zones sensibles séparées sont déterminées par l'expression

$$h_1(x) = \begin{cases} g_1(x) & \forall x;\ g_1(x) \geq 0 \\ 0 & \forall x;\ g_1(x) < 0 \end{cases} ,$$

tandis que celles du deuxième photodiode (17) qui obtient le signal électrique de signe opposé à celui du premier photodiode (16) sont déterminées par l'expression :

$$h_2(x) = \begin{cases} g_1(x) & \forall x;\ g_1(x) < 0 \\ 0 & \forall x;\ g_1(x) \geq 0 \end{cases}$$

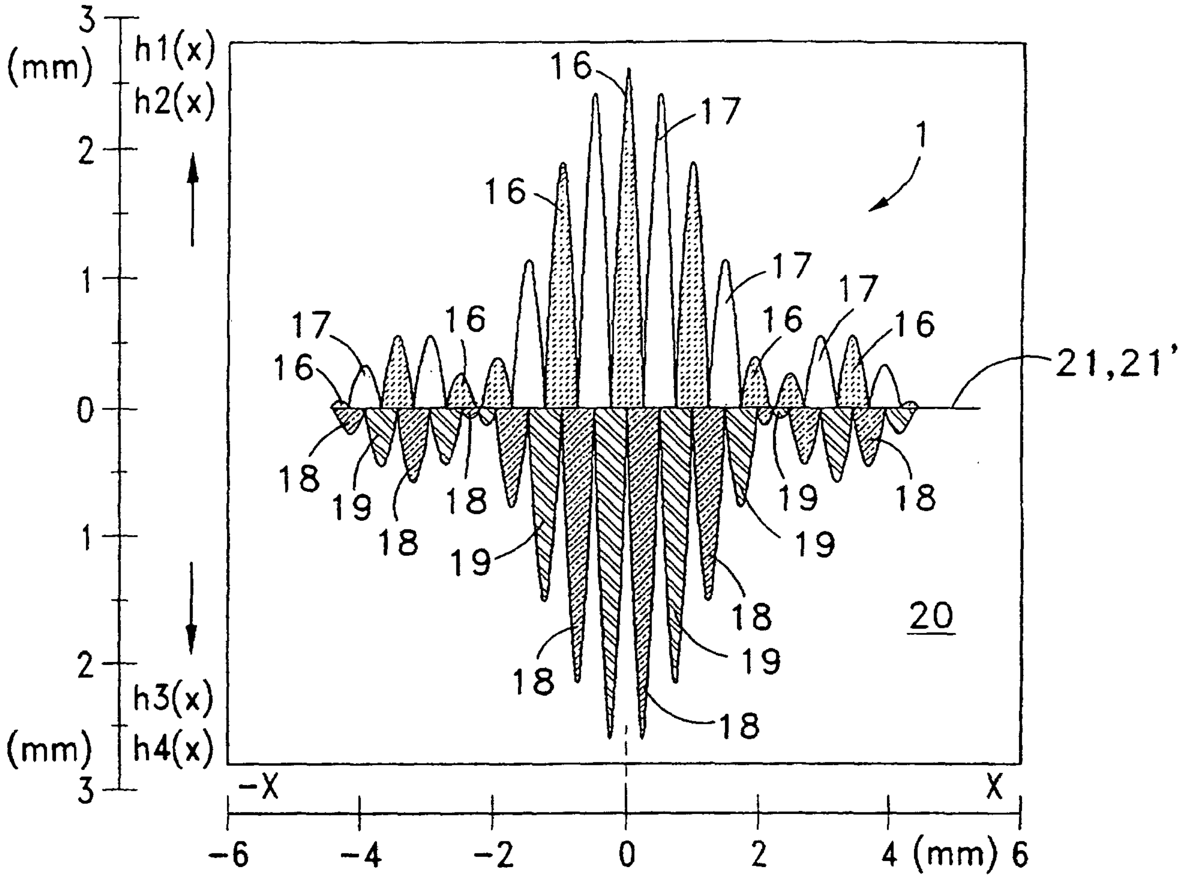

3
(mm)
h1(x)
h2(x)
2
1
0
1
2
h3(x)
(mm)
h4(x)
3
16
17
1
16
17
17
16
16
17
16
16
21,21'
18
19
18
18
19
19
18
18
19
19
18
20
18
19
18
-X
X
-6
-4
-2
0
2
4 (mm) 6


FIG. 1

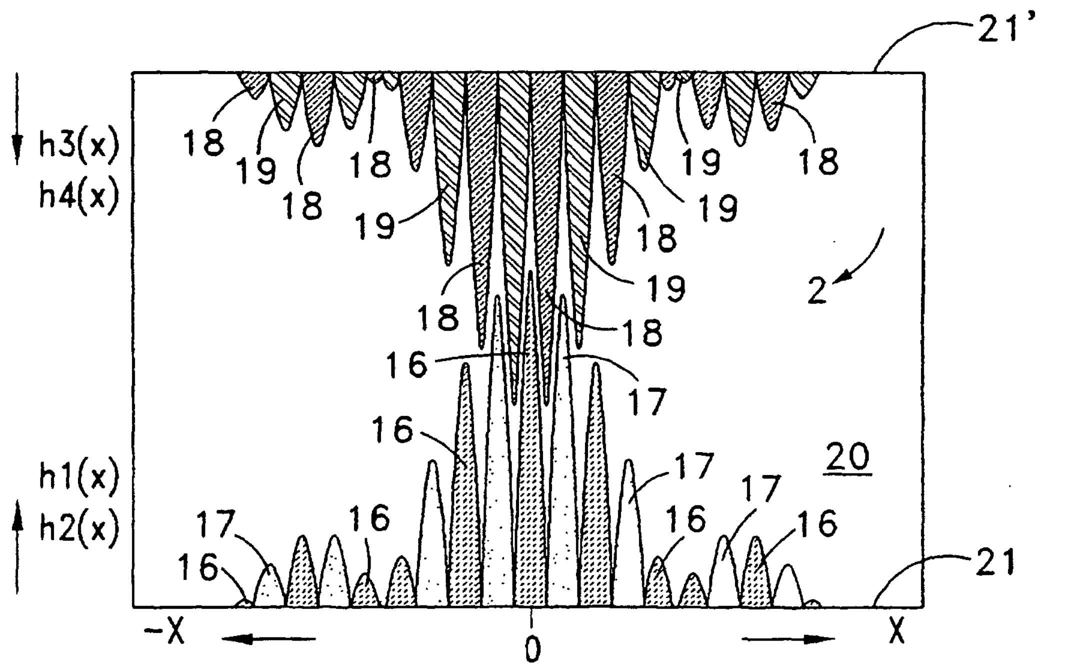

21'
h3(x)
h4(x)
18
19
18
18
19
19
18
18
19
19
18
2
18
18
16
17
16
17
20
h1(x)
h2(x)
17
16
17
16
16
16
21
-X
0
X


FIG. 2

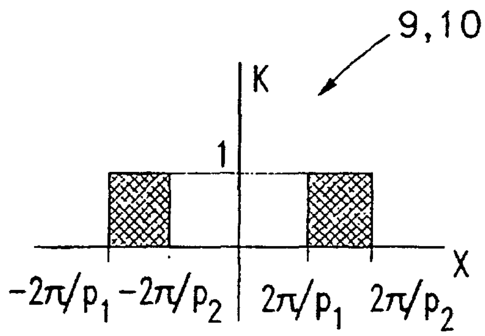


FIG. 3

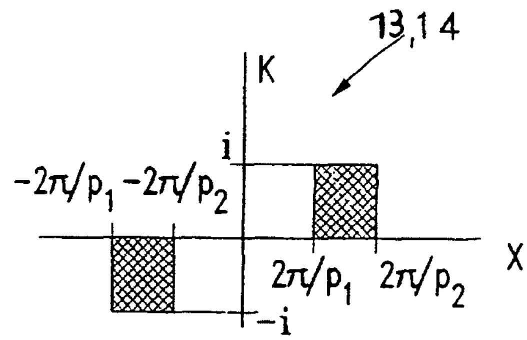


FIG. 4

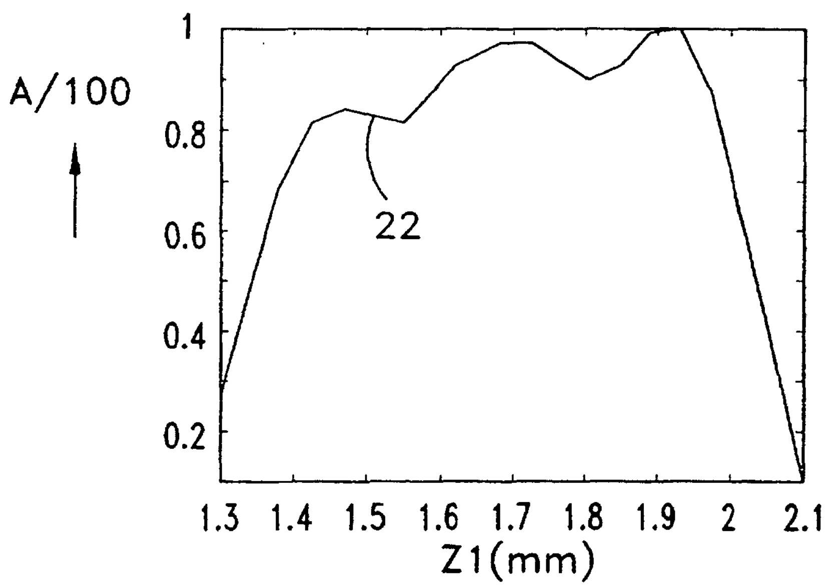


FIG. 5

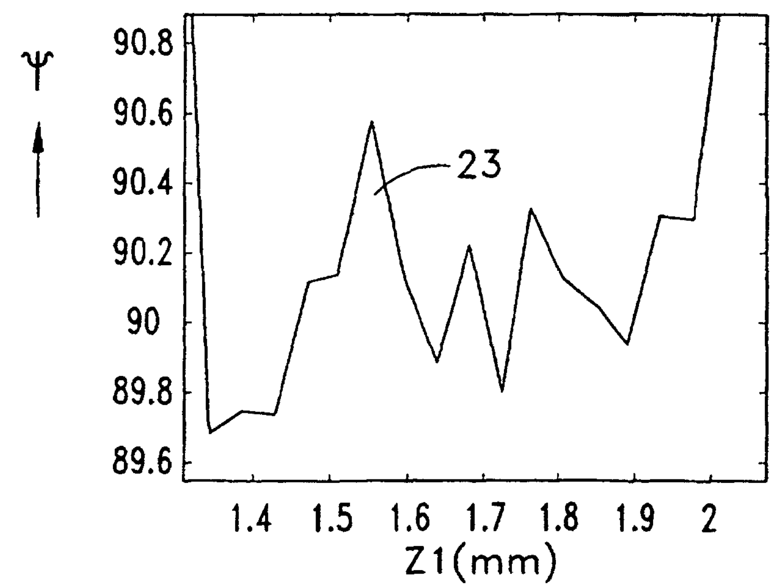


FIG. 6